# EUROPEAN PATENT APPLICATION

(11) **EP 1 452 216 A1**
(43) Date of publication of application: **01.09.2004**
(21) Application number: 03075735.5
(22) Date of filing: 10.03.2003
(51) Int. Cl.: B01D 27/00, B01D 27/08, B01D 27/14, B01D 29/05, B01D 29/15, B01D 35/30

(54) **Filter device**

(30) Priority: 11.02.2003 EP 03075467
(71) Applicant: NTZ Nederland BV, 3047 BP Rotterdam (NL)
(72) Inventor: Schaerlaeckens, Wilhelmus Petrus Maria, 3140 AA Maassluis (NL); Nieuwland, Pierre Gerard, 3140 AA Maassluis (NL)

(57) **Abstract**

Hydraulic filter (1), in particular micro filter for filtering oil, more in particular ultra high efficiency micro filter, preferably composed of a cellulose fibre based filter material (8) incorporated around a perforated central core (17) forming a mainly cylindrical central chamber (16), the filter (1) at least being intended for use with end closure elements (30, 31) for preventing passage of oil in the filter material (8) in the axial direction, in which the end closure elements (30, 31) are provided in a carrier structure (29; 30, 31) for said filter, comprising an axially extending connection member (29) for interconnecting said elements (30, 31), said member (29) being provided with at least part of a connection means (32, 32').

## Description

The present invention relates to an ultra high efficiency micro Filter and microfilter part as defined in the preamble of claim 1.

Such filters are generally known in the art, e.g. from the international patent publication PCT/NL00/00530 in the name of Applicant. Such filters have many advantages as are a.o. described in Applicants non- pre-published earlier patents application of January 9, 2003 and application nr. 030 75467.5 of February 11 2003, which are hereby regarded included, and as is described in SAE paper 2001-01-0867 "Automatic transmission hydraulic system cleanliness - the effects of operating conditions, measurement techniques and high efficiency filters", which document is hereby also regarded included.

These filter elements come with end closure elements which prevent oil from leaking in axial direction or, alternatively, which support the axial flow oil through the filter material, which at micro filters, at least in the currently claimed type thereof, is of considerable thickness so as to enable, during the passage of oil through the filter material, small particles to be distracted from the oil, to bond to the filter material on the basis of electrostatic or polaric forces.

For the latter reason the so-called micro-filters have a so-called in-depth functioning in which within the filtering material, filtering takes place on the basis of electrostatic forces. Therefore the layer of filtering material, according to the current invention preferably cellulose based fibres, is relatively thick and requires a relatively high operating pressure fall over the filter, e.g. about half a Bar. Conventional filters on the other hand, i.e, filters that solely based on the principle of blocking particles by a screen having the smallest possible openings therein, operate superficial, and therefore require a relatively low pressure drop over such filter, e.g. of only a tenth of a Bar. They are therefore commonly used as mainstream filters in automotive applications. Where full flow filters Filter all of the oil passing through such main stream, micro filters have a much smaller flow due to a relatively large pressure drop, however, due to their efficiency, appear over an initially delayed period of time, to be much more effective than such conventional filters. Conventionally, micro filters have been used in a so called by pass configuration, by passing a conventional, i.e. surface filtering based mainstream filter.

Recent development of the filter by Applicant however, enables the micro filter to be used in an at least virtual mainstream configuration, i.e. enables the filter to be incorporated within the housing of such conventional mainstream filter. Thus, where the micro filter was formerly used in separate filter housings in a by pass arrangement, and thus relatively costly and space consuming, and thus mainly used in industrial or heavy duty automotive applications, it may now without the presence of these former disadvantages, be used in personal cars. Herewith the range and market of applications is significantly extended. Also it has now become a requirement to save on weight of the Filter and to increase the ease of use, in particular for replacement of the filter, in other words to render the principle solution found commercially even more attractive.

It is therefore now an object of the current invention to significantly modify the currently known micro filters both in terms of weight and in terms of easy of use, while maintaining the technical requirements and advantages of the micro filter design.

According to the invention such is realised when the features according to the characterising portion of claim 1 are applied. With such a filter device it is now possible for a micro filter to accommodate a variety of applications in a simple, i.e. easy to use manner, while maintaining safety and versatility of the filter and carrier structure. At the same time commonly applied pre-stressing external spring means may be omitted, since the pre-stress may be and is provided at manufacture of the filter, due to the presence of an interconnection of both end closure elements. The end closure elements and the interconnecting members thus form a carrier or at least part of a carrier structure for the filter material. In fact, apart from the advantage that the new structure sets aside the risks of loosing parts and/of incorrect insertion of parts within a filter housing, the interconnection member together with the perforated core around which the filter material is provided form an additional support in the rigidity of the structure of the device. This is especially so with a capability of the interconnection to firmly keep together the filter material end face closure elements. Advantageously the filter device may thus be provided as a unit rather than in separated parts, i.e. the central core with surrounding filter material, the end face elements and pressure springs for pushing the elements against said end faces. The new carrier is moreover according to a preferred embodiment provided in a synthetic material so that all these advantages may even come at a relatively low cost. In a further preferred, strength enhancing embodiment, the interconnecting part between two end faces consists of two largely conically shaped parts that meet at their respective smallest diameters. Advantageously this shape of the interconnecting carrier may or may not be further arranged and/or used to function as a venturi device. If so, as is the case with a further embodiment of the invention, openings or communication ports are provided in the apex, i.e. narrowest part of the connecting member, connecting the interior of the communication means with the external thereof, i.e. with the internal chamber of the central core and filter material. The filter device may in such set up be used as a replacement for conventional in ―line filters. Advantageously, such new set up of the claimed filter device does not require the overload valve present in the conventional filters. Where the latter with time of use gradually requires an increasing pressure drop over the filter due to its surface becoming clogged up with dirt, and thus for safety requires such valve, the micro filter does not tend to clog up, at least does not require a gradually increasing pressure fall. More importantly however, the new design is intrinsically safe because the in-line oil may in any case freely flow through the connecting means of the new filter device. If desired however, e.g. conventional by-pass applications, of course the connection device, e.g. at the location of an end face closure element may also be provided closed.

In a further sophistication of the claimed structure, axial play is provided within a connection means in said structure. By this provision it has become possible to enable an end face closure element to move towards the other in situations with peak operating pressures, which might cause the filter material to axially shrink under said pressure. In such situations, according to a further insight underlying the current invention, the function of the end faces is maintained in that such external pressure may also press the end closure elements to maintaining their position in contact with the relevant end face of the filter. This is all the more important because at the end faces, i.e. between the end faces end the elements excess debris may have been accumulated, which preferably should not suddenly be released. This rule also holds even in embodiments where so called labyrinth rings protruding into the filter material for minimising the chance of said sudden release have been provided on the end faces.

A particular measure according to a further aspect of the invention is related to the connection means in the connection member being provided as a snap connection. This measure enhances the versatility and easy of use of the involved type of micro filter. In fact it may be said that the connection means such as the snap connection take over the function of said formerly used springs. The snap connection is favourably located in the apex of the connecting member, more in particular when provided with axially protruding members, utilising the elastically deformable feature of a material applied favourably amongst others to this end. Such material according to te invention most favourably is a synthetic material, more in particular a nylon type of material.

The invention will now by way of example be elucidated further along a drawing in which:
Figure 1 is a schematic representation in sectional view of a first embodiment according to the invention depicted incorporated in a filter housing;
Figure 2 in a sectional view provides a representation of a second, elaborated embodiment according to the invention; while
Figure 3 is a sectional view according to the line A-A in figure 2.

In the figures, identical reference numbers relate to identical or at least comparable technical features.

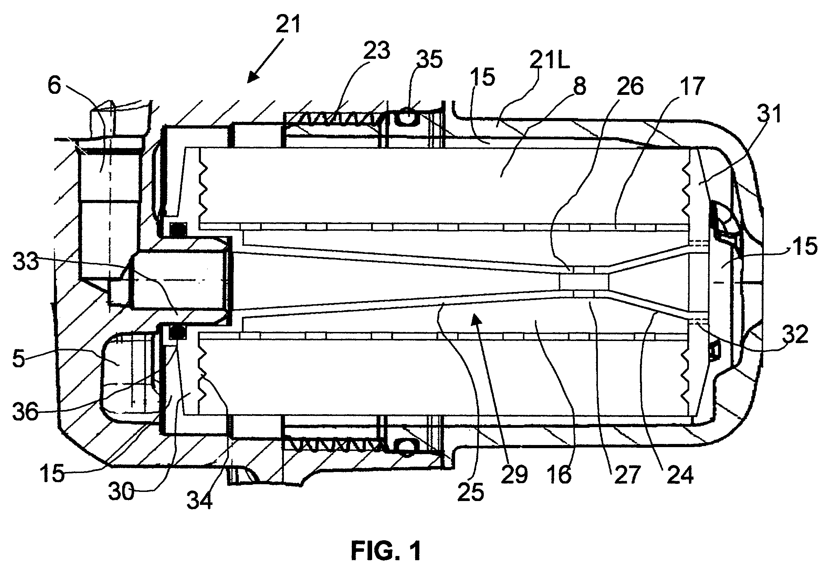

Figure 1 shows a part of a combustion engine comprising a filter device 1 accommodated in a cylindrical device housing 21. The filter 1 is incorporated between axial end closure elements 30 and 31. The housing 21, and correspondingly the filter device 1, comprises an oil inlet opening 5 and an oil outlet opening 6, which in the present example are both located aligned with the geometrical device axis A. The filter device 1 comprises a micro filter material 8 and a carrier 29, i.e. carrier and interconnecting structure 29 for the filter device 1.

The axial end faces of the filter material 8, i.e. at the sides of inlet and outlet openings 5 and 6 are closed for axial passage of oil to be filtered by end face closure elements 30, 31. The closure elements 30 and 31 are firmly pressed against the axial end of the micro filter material 8 by a specific interconnection means 29. The end face closing elements 30 and 31 may as depicted be provided with a so called labyrinth profile, here composed by circumferential rings 34 of a generally triangular shape in cross section, on said faces 30, 31 and protruding into the filter material of the micro filter material 8. The micro filter material 8 is composed of a cellulose fibre material incorporated around a perforated central core 17.

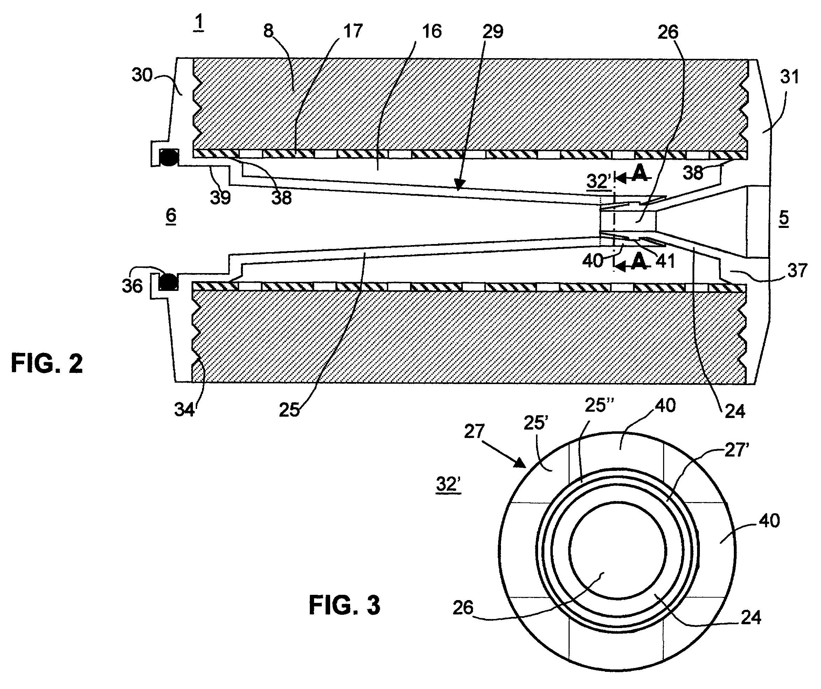

The filtering material is of considerable thickness in radial direction, for which reason these filters are sometimes also denoted radial filters. By this filter structure the micro filter has axial end faces, which undesirably may be open for passage of oil during the process of filtering. For preventing such passage the filter material 8 is incorporated between said end closure elements 30, 31, which are firmly pressed against the end faces after they have been mutually connected together under a pre-stress. While in the embodiment according to figure 1 this is realised by a threaded or screw connection 32, in the embodiment according to figure 2 such pre-stress is realised by a snap connection 32'. Where in the first embodiment the pre- stress is to be realised by turning around, i.e. screwing one or both end faces 30, 31, such is in the second embodiment reproducibly realised by pressing the elements together until the snapping parts are connected. More over the latter embodiment does not require the labyrinth protrusions 34 to be annular.

For connecting the elements 30, 31, each element is provided with an axially extending member 24, 25 provided with part of a connection means 29. In the present embodiment the members 24, 25 protrude within an internal chamber 16 of the filter device 1. Once pressed together, the elements 30, 31, at least the connecting means are mutually fixed in a manner in which they are not capable of moving away from one another. Should there exist at some time a very high pressure within the filter housing 21, the connection means 29 allow the distinctive parts thereof to mutually move, i.e. with the end closure elements 30, 31 moving towards one another. In the shown embodiment this is favourably realised by the so-called snap connection described along figures 2 and 3. In a further elaboration of this embodiment, which is not depicted, this move ability has been limited by the provision of radial protruding stops on the interconnecting means 29. By this feature it is in case of an excessively high pressure shock prevented that the filter device, in particular the perforated central core 17 would collapse radial inward. Thus, such stop form a safety measure for the filter device.

The generally cylindrically shaped filter element 8 is a micro Filter and is often arranged in a by-pass configuration. The currently depicted embodiments are suitable for incorporation of the filter in a conventional mainstream Filter arrangement and housing 21. This is done by the incorporation of a venturi device in the filter to which end the connection means 29 and the members 30, 31 are produced internally open and connected to the exterior of the filter 1, such that the axial ends of chamber 16 are in connection to the oil inlet 5 and the oil outlet 6 of the filter housing 21. Where according to the invention the conical shape of part 24 and 25 may also solely be used for reinforcement of the structure of the interconnecting part 29, this shape of the members 24, 25 is here also favourably used to complete the presence of an apex 26 which together with conical part 24, 25 and openings 27 forms a venturi device, here also referred to by reference number 29. The interconnecting means could be present in virtually the same manner without functioning as a venturi device, however solely as an interconnecting means. The apex 26 thus is part of the interconnecting means 29, and moreover in the embodiment of figure 2 also part of the interconnection 32'.

In figure 2, while the connection part 32' forms the smallest diameter part of each member, it is as in the embodiment of figure 1 largely cylindrically shaped, and provided with openings 27 towards the inner chamber 16 of the filter 1. In this manner the carrier 29 for the filter device 1, simultaneously functions as venturi device. With the latter function included in the carrier structure 29 according to the invention, oil may flow virtually freely between oil inlet 5 and oil outlet 6 through the carrier 29, causing a minimal pressure drop that is known from conventional, surface based filters. However, during the passage through the conical shaped members 24, 25, at the smallest passage 26, a significant pressure drop is created, causing a pressure decrease in the chamber 16, and thereby a relatively high pressure drop over the filter material 8, i.e. in radial direction, as is required for the proper functioning of micro filters, at least of the current type. In this manner a micro filter 8, in fact still operating in a so-called by-pass mode, has become suitable for arrangement and use as an ordinary in line filter, i.e. it virtually operates in the same manner as a conventional so called full flow filter, and may consequently constitute a replacement for the latter.

As to such replacement, Figure 1 constitutes an example and thus further illustrates along a sectional view, the housing 21 for a conventional filter, the already mentioned oil entrance 5 to the filter housing 21, leading to both an oil chamber 15 present between the housing 21 and the micro filter 8. The entrance is here situated at the same axial end as the oil outlet 6. It could however also have been situated at any other location communicating with space 15, e.g. radial or at the other axial end. Via space 15, the oil inlet 5 also connects to a first conical part 24 of a venturi arrangement 29 largely corresponding to that of figure 1. In this embodiment the oil inlet communicates with a partly shown part 21 of a device such as a hydraulic machine, a combustion engine or transmission casing part, with which the housing 21 is partly integrated. The housing 21 comprises an otherwise fully closed member part 21 L, which in this example may be screwed to part 21 over threads 23. A sealing 35, in casu an O- ring is incorporated between an outer circumferential part of the member part 21L and the inner circumferential part of housing 21, i.e. at the mutually overlapping parts.

All of the end closure elements 30, 31 and the venturi device 29 are made of a synthetic material, in casu a nylon based material. The first conical part 24 is produced shorter than the second conical part 25, such that the latter has a larger amount of interior space. By this feature the oil stream passed through, and increased with oil from the chamber 16, may gradually expand towards oil outlet 6. Although depicted sharp, all edges and/or transitions in the carrier 29 are preferably produced rounded or smoothened so as to form gradual transitions. Also the apex 26 may internally be shaped at least somewhat convex rather than fully cylindrical. Further, it may be that the end of part 24 extends relatively further into part 25 than suggested by the drawing.

The end closure element 30 is positioned over a central notch 33 in which the oil outlet 6 of the filter housing 21 is located. The element 30 and the notch 33, in fact the filter housing 21 are sealed from one another by a sealing means, in casu via an O-ring, accommodated in a groove 36 of the integrated closure part 30 and venturi arrangement 29. In an alternative embodiment, especially when the carrier 29 is produced in a synthetic material, the O-ring 36 and chamber therefore are omitted for sake of costs, while the diameter of the seat part 39 of carrier 29 is narrowed to slightly below the lower end of the tolerance range of diameters for the notch 33. Thus the seat 39 itself forms the sealing means. Apart from the advantage of having a high efficiency, fine grade filter combined within the location and functional requirements of a conventional filter, the embodiment comes with the advantages of an axially oriented venturi device 29, utilising the otherwise not or only partly used interior 16 of the microfilter 8. Especially, for enabling such operation, the present invention surprisingly and favourably has utilised an existing, relatively large flow of oil for creating a significant pressure drop over the micro filter 8 by the special and innovative use of a venturi device 29, while maintaining an relatively low overall pressure drop over the filter device 1.

Figure 2 further illustrates that seat 39 also forms a centralisation member for locating a filter material 8 cartridge, i.e. the core 17 thereof in contact with a closure member 30, 31. This feature enhances both the quality of the closing of the end faces of the filter material and the assembly of the entire device. The latter argument is all the more important because in a further and preferred embodiment not depicted, the elements 30, 31 are provided with a rim, circumferentially embracing a small part the filter material 8, thereby protecting the filter material 8, i.e. near an axial end face from contacted an disturbed at handling, e.g. at insertion in a filter housing. Also the rim may aid in positioning the filter device in a housing. For said reasons of quality and assembly, also the other end closure element 31 is provided with a seat 37 for core 17, while both seats 39, and 37 are provided with a rounded or clearly conical part 38.

Figure 3 is a cross section and view along the line A-A in figure 2. From interior to exterior it shows part 24; annular opening 27' communicating with the interior space of device 29 and with the chamber 16 via openings 27; a conically inwardly declining wall part 25" of connecting part 25; four axial extending protrusions 40; openings 27 in between said protrusions 40. At the location of the openings 27 an end face 25' is visible in this cross sectional view. From figure 2 it may be seen that protrusions 40 of part 25 hook over an edge 41 of connecting part 24. The snap connection utilises a elastically deformable feature of the material of device 29, so elected for this purpose. Figure 2 also shows that the inner side of the end part of protrusions 40 is hooked shaped, comprising a first obliquely cut off part, both for enhancing entry of part 24 into part 25, and for enabling the protrusions 40 to at least partly pass over the edge 41 before deflecting outwardly against elastic material force and subsequently klicking back for hooking over rim 41.

The invention, apart from the following claims, also relates to the preceding description and all details and aspects in the drawing, which are directly and unambiguously derivable there from, at least by a man skilled in the art.

## Claims

1. Hydraulic filter (1), in particular micro filter for filtering oil, more in particular ultra high efficiency micro filter, preferably composed of a cellulose fibre based filter material (8) incorporated around a perforated central core (17) forming a mainly cylindrical central chamber (16), the filter (1) at least being intended for use with end closure elements (30, 31) for preventing passage of oil in the filter material (8) in the axial direction, **characterised in that** the end closure elements (30, 31) are provided in a carrier structure (29; 30, 31) for said filter, comprising an axially extending connection member (29) for interconnecting said elements (30, 31), said member (29) being provided with at least part of a connection means (32, 32').

2. Filter (1) according to the preceding claim, **characterised in that** the said connection means (32') allow a limited axial play between said end closure elements (30, 31 ).

3. Filter (1) according to claim 1 or 2, **characterised in that** the connection means (32) are composed as a snap connection.

4. Filter (1) according to claim 1 or 2 **characterised in that** the connection means (32; 32') are composed of a synthetic material.

5. Filter (1) according to any of the preceding claims, **characterised in that** a connection member (29) is composed of a synthetic material.

6. Filter (1) according to any of the preceding claims, **characterised in that** at least one axial closure element (30, 31), a connecting member (24, 25) and a related part of said connection means (32; 32') are integrally produced in a synthetic material.

7. Filter (1) according to any of the preceding claims, **characterised in that** the synthetic material is nylon based.

8. Filter (1) according to any of the preceding claims, **characterised in that** the axial member (29) extends within the inner chamber (16) of the filter (1).

9. Filter (1) according to any of the preceding claims, **characterised in that** both end closure elements are provided with an axially extending member (24, 25).

10. Filter element according to any of the preceding claims, **characterised in that** the members (24, 25) are each predominantly conically produced.

11. Filter element according to the preceding claim, **characterised in that** the connection means (32') are incorporated in the narrowest part of each member.

12. Filter (1) according to the preceding claim, **characterised in that** the connection members (24, 25) are each produced as a closed, non-perforated tube, each connecting to the exterior of the filter, while the connection means (32') incorporate openings (27) connecting to the inner chamber (16) of the filter.

13. Filter (1) according to any of the preceding claims, **characterised in that** at least one connection member (24, 25) and/or closure element (30, 31) is/are provided with a positioning part (39), e.g. mainly cylindrically shaped, including an end stop for positioning the same over an inlet or outlet opening (5; 6, 33) of a filter housing (21).

14. Filter (1) according to any of the preceding claims, **characterised in that** an axially extending member (24, 25), at least near its axial end at the end closure element (30, 31) to which it is connected or with which it forms an integral part is provided with a cylindrical extension (39, 37) over which the filter (1), in particular the perforated core (17) may be positioned.

15. Filter (1) according to any of the preceding claims, **characterised in that** the connection means (32') is produced mainly cylindrically and battlement shaped at at least a one side part, comprising a number, preferably three or four, of protruding pointers (40), hooking into a counter part (41), the design thereby allowing the enveloped part to move into the interior of the counterpart unhampered.

16. Filter (1) according to any of the preceding claims, **characterised in that** the connection means (32') comprises protrusions (40) which are located on the external side of the connection structure, while the counterpart (24) enveloped by said protrusions is provided with stops that define an end point to the possibility of relative movement of said interconnecting members (24, 25) in said connection (32').

17. Filter (1) according to any of the preceding claims, **characterised in that** a closure element (30, 31) is provided with one or more concentric ring like protrusions axially protruding into the filter material (8).

18. Filter carrier (29; 30, 31) comprising an end closure element (30, 31) provided with an axially extending member (24, 25) comprising at least part of a connection means (32, 32'), all as described in any one or more of the preceding claims.

19. Set of Filter (1) and filter carrier (29, 30, 31) comprising the features as described in any one or more of the preceding claims.

20. Combustion Engine comprising a Filter device (1) according to any of the preceding claims
